# FASCICULE DE BREVET EUROPEEN

(11) **EP 4 179 285 B1**
(45) Date de publication et mention de la délivrance du brevet: **24.12.2025**
(21) Numéro de dépôt: 21746078.1
(22) Date de dépôt: 06.07.2021
(51) Int. Cl.: G01M 17/02, G01B 11/245, G01M 1/16, G01B 5/06, G01B 5/207, G01B 11/06, G01B 11/25

(54) **DISPOSITIF ET PROCÉDÉ DE CARACTÉRISATION D'UN PNEUMATIQUE EN UNIFORMITÉ**
VORRICHTUNG UND VERFAHREN ZUR CHARAKTERISIERUNG EINES REIFENS HINSICHTLICH DER GLEICHFÖRMIGKEIT
DEVICE AND METHOD FOR CHARACTERIZING A TYRE IN TERMS OF UNIFORMITY

(30) Priorité: 07.07.2020 FR 2007160
(43) Date de publication de la demande: 17.05.2023
(73) Titulaire: COMPAGNIE GENERALE DES ETABLISSEMENTS MICHELIN, 63000 Clermont-Ferrand (FR)
(72) Inventeur: DE-KERMADEC, Christophe, 63040 Clermont-Ferrand Cedex 09 (FR); LIM, Damien, 63040 Clermont-Ferrand Cedex 09 (FR); CHANSEAUME, Anthony, 63040 Clermont-Ferrand Cedex 09 (FR)
(74) Mandataire: M.F.P. Michelin
(86) Numéro de dépôt international: PCT/FR2021/051251
(87) Numéro de publication internationale: WO 2022/008841

(56) Documents cités:
- EP-A1- 2 549 225
- EP-A1- 2 799 848
- WO-A1-2012/074527
- FR-A1- 2 825 664
- JP-A- 2006 290 290
- JP-A- 2008 196 881

## Description

La présente invention concerne le domaine des pneumatiques, notamment pour véhicules.

Plus particulièrement, l'invention concerne un dispositif de caractérisation d'un pneumatique en uniformité.

De tels dispositifs sont décrits dans les documents WO2012/074527 A1 et JP2008196881 A.

Par « uniformité », on entend tous les écarts possibles entre un pneumatique réel et un pneumatique idéal, son modèle de référence. Il s'agit de toutes les variations locales ou irrégularités de ce pneumatique réel en termes de caractéristiques de masse, géométriques ou de rigidité.

Les défauts d'uniformité sont généralement dus aux imperfections introduites par les procédés de fabrication. Ils ne sont pour la plupart pas mesurables directement mais par l'intermédiaire des effets qu'ils engendrent.

Pendant la rotation des pneumatiques, les défauts d'uniformité présents dans la structure du pneumatique produisent des variations des forces sur l'axe des roues. Ces défauts deviennent importants lorsque ces variations de force sont transmises sous forme de vibrations notables au véhicule et aux occupants du véhicule.

Il est connu de détecter les défauts de géométrie, de rigidité et de balourds statique et dynamique en mettant en rotation à basse vitesse de rotation, un pneumatique gonflé.

Toutefois, de telles mesures réalisées à basse vitesse par des machines de mesure d'uniformité connues sous le nom de « low speed uniformity device » en termes anglo-saxons, ne permettent pas d'anticiper l'ensemble des efforts dynamiques (forces et moments) à grandes vitesses.

En effet, lors du roulage du pneumatique à haute vitesse, par exemple lors que le véhicule circule sur une voie rapide, supérieure à 80km/h, le sommet du pneumatique est soumis à une force centrifuge significative. Les défauts de géométries sont donc accentués, notamment lorsque des masses sont localisées au sommet du pneumatique, celles-ci vont engendrer des déformations localisées du pneumatique. Ces déformations produites par l'augmentation de la vitesse ne sont pas prévisibles par les mesures réalisées par les dispositifs connus à basse vitesse. Toutefois, de tels défauts produisent en revanche des effets significatifs du pneumatique sur le centre de la roue et donc sur le véhicule.

Des dispositifs configurés pour mesurer les efforts dynamiques à vitesse élevée, dits « high speed uniformity device » ont ainsi été développés pour détecter les effets à vitesse élevée des défauts d'uniformité d'un pneumatique. Les mesures réalisées sont représentatives des excitations auxquelles le pneumatique soumet le véhicule lorsque celui-ci circule à une vitesse élevée, par exemple supérieure à 80km/h.

Toutefois, de tels dispositifs sont particulièrement coûteux et difficiles à mettre en œuvre. Par ailleurs, les mesures réalisées par de tels dispositifs sont difficilement exploitables pour remonter aux causes : combinaison de tous les effets, amplification dynamique, comportement modal du pneu, etc....

Les dispositifs de mesure fonctionnant à haute vitesse sont ainsi plus difficiles à concevoir et utiliser, d'une part, et, d'autre part, l'exploitation des mesures obtenues est particulièrement difficile : les efforts relevés sont les effets combinés de toutes les causes et il est nécessaire de savoir distinguer ces causes.

Persiste donc le besoin de proposer un dispositif de caractérisation d'un pneumatique en uniformité de conception simple et dont l'interprétation des mesures réalisées sont faciles.

La présente invention a pour objet un dispositif de caractérisation d'un pneumatique en uniformité, le sommet du pneumatique renfermant des parties métalliques soudées, le dispositif comprenant un bâti, un support monté rotatif par rapport au bâti et destiné à recevoir le pneumatique à caractérisé. Le support rotatif est destiné à être mis en rotation à basse vitesse.

Par « basse vitesse », on entend une vitesse de rotation du support rotatif inférieure ou égale à environ 20tr/mn.

Le dispositif comprend en outre un organe de mesure de la position angulaire du support rotatif solidaire du bâti, fixé, à titre d'exemple non limitatif, sous le support rotatif.

Le dispositif comprend en outre au moins deux organes de mesure solidaires du bâti et placés respectivement de telle sorte à mesurer ou détecter, pour chaque position angulaire du support rotatif, simultanément la géométrie de surface interne et la géométrie de surface externe du pneumatique lors de la rotation du support rotatif.

Le dispositif comprend un module d'acquisition des signaux de géométrie de surface du pneumatique provenant des organes de mesure.

Ainsi, on peut détecter la géométrique de surface du pneumatique à caractériser en utilisant un dispositif de caractérisation comprenant un support du pneumatique capable d'être mis en rotation à faible vitesse.

Selon l'invention, l'unité électronique de commande comprend un module de détermination des variations d'épaisseur du pneumatique pour chaque position angulaire du support rotatif et, notamment sur la largeur dudit pneumatique, en fonction des signaux de géométrie de surface interne et externe.

Selon l'invention, l'unité électronique de commande comprend un module de conversion desdites variations d'épaisseur en variations de masse en fonction d'une densité moyenne prédéterminée dudit pneumatique, le module de conversion étant configuré pour détecter des défauts de soudures des parties métalliques du sommet du pneumatique et pour leur appliquer une densité différente prédéterminée.

Le pneumatique est réalisé principalement en caoutchouc, la densité moyenne du caoutchouc est comprise entre 0.92 et 0.99. Toutefois, le sommet comporte aussi des nappes constituées de câbles métalliques associés par des films de caoutchouc, ensemble dont la densité est de l'ordre de 3 à 5. Les masses localisées sont, pour la plupart, dues aux soudures des produits constituants le sommet. La répartition sur la largeur du pneu des variations de masse permet d'identifier le produit en cause et d'attribuer la densité adaptée pour calculer les variations de masse correspondantes.

En variante, le module de conversion desdites variations d'épaisseur en variations de masse en fonction de la densité moyenne dudit pneumatique peut être externalisé à l'écart du dispositif.

A partir des variations d'épaisseur on peut ainsi déduire les variations de masse du sommet du pneumatique en fonction des densités des produits en cause. Ainsi, on peut détecter l'ensemble des masses mal réparties sur le pneumatique et anticiper les déformations irrégulières d'un pneumatique sous l'effet de la force centrifuge à haute vitesse et ce en utilisant un dispositif de caractérisation comprenant un support du pneumatique mis en rotation à faible vitesse.

Par exemple, l'unité électronique de commande comprend un module d'élaboration d'une cartographie de variations de masse autour du pneumatique à partir des informations issues du module de conversion.

Ainsi, grâce à cette cartographie, il est possible d'effectuer des modifications du procédé de fabrication du pneumatique en vue de les maîtriser, voire de les supprimer.

Les organes de mesure sont, par exemple, configurés pour mesurer au moins la géométrie de surface interne et la géométrie de surface externe au sommet du pneumatique. En variante, on pourrait prévoir d'autres organes de mesure pour mesurer la géométrie de surface interne et la géométrie de surface externe du pneumatique à d'autres endroits du pneumatique, par exemple des flancs.

Les organes de mesure peuvent être des lasers, par exemple en ligne ou en point, ou encore un capteur de type palpeur comprenant une jauge de déformation ou tout capteur capable de mesurer ou détecter la géométrie de surface interne et la géométrie de surface externe du pneumatique.

Le support rotatif peut être entraîné en rotation manuellement ou par un organe d'entraînement, tel que par exemple un moteur.

Par exemple, le dispositif comprend en outre au moins une cale solidaire du support rotatif pour le centrage du pneumatique.

Le pneumatique est, par exemple, centré par au moins une cale solidaire du support rotatif. On pourrait, par exemple, prévoir trois pions solidaires du support rotatif et situés sur un cercle correspondant sensiblement au diamètre de la jante du pneumatique.

Selon un second aspect, l'invention concerne un procédé de caractérisation d'un pneumatique en uniformité, le sommet du pneumatique renfermant des parties métalliques soudées, dans lequel :
- on pose le pneumatique sur un support rotatif d'un dispositif de caractérisation du pneumatique,
- on rapproche le pneumatique et au moins deux organes de mesure du dispositif, on peut par exemple positionner le pneumatique entre les organes de mesures dudit dispositif, ou rapprocher du pneumatique les organes de mesure.

Selon le procédé, on met en rotation le support rotatif à une vitesse basse, par exemple inférieure ou égale à 20tr/mn, et on mesure, par les organes de mesure, pour chaque position angulaire du support rotatif, simultanément la géométrie de surface interne et externe du pneumatique lors de la rotation dudit support rotatif.

Selon un mode de réalisation, on détermine les variations de répartition d'épaisseur en chaque point du sommet afin de déterminer les variations de masses sur le pneumatique en fonction des signaux de géométrie interne et externe.

Les deux organes de mesures sont disposés en vis-à-vis l'un de l'autre.

Selon l'invention, pour déterminer les variations de répartition de masses sur le pneumatique, on détermine les variations d'épaisseur pour chaque position angulaire dudit pneumatique, ou du support rotatif, et notamment sur la largeur du sommet dudit pneumatique, en fonction desdits signaux de géométrie interne et externe et on convertit lesdites variations d'épaisseur en variations de masse en fonction d'une densité moyenne prédéterminée du pneumatique, une densité différente prédéterminée étant appliquée lors de la détection de défauts de soudures des parties métalliques du sommet du pneumatique.

Par exemple, on élabore une cartographie de variations de masse autour du pneumatique à partir des variations de masse déterminées.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] représente schématiquement un dispositif de caractérisation d'un pneumatique en uniformité selon l'invention ;
[Fig 2] montre une courbe illustrant le profil de variation de volume par rapport à la position angulaire du pneumatique issue du module de détermination des variations d'épaisseur du dispositif de la figure 1 ; et
[Fig 3] illustre les étapes d'un procédé de caractérisation d'un pneumatique en uniformité selon l'invention mis en œuvre par le dispositif de la figure 1.

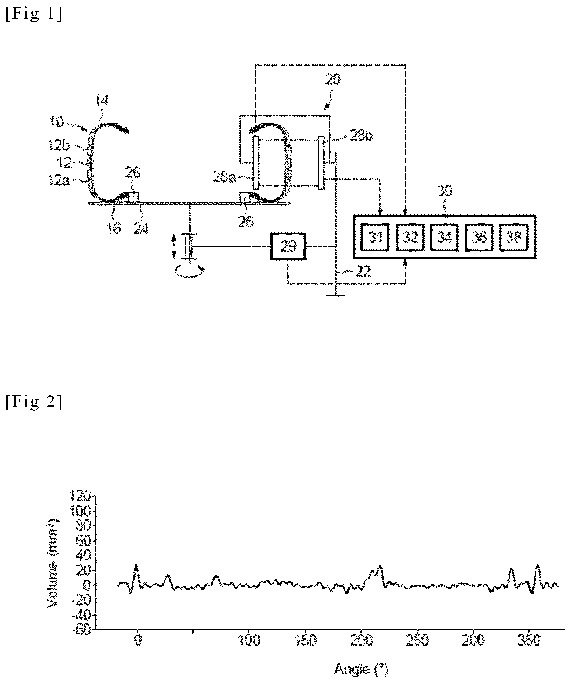

Sur la figure 1 est représenté schématiquement en coupe un pneumatique 10 comprenant une bande de roulement 12 et deux flancs latéraux 14, 16 entourant de part et d'autre la bande de roulement 12.

La bande de roulement comprend une surface de roulement destinée à venir en contact avec une chaussée lors du roulage de la roue du véhicule. Le pneumatique 10 est destiné à être monté sur une jante (non représentée).

La bande de roulement 12 comprend une pluralité d'incisions 12a délimitant des pains de gomme présentant des arêtes 12b aptes à venir améliorer l'adhérence du pneumatique sur la chaussée.

Par « pneumatique », on entend tous les types de bandages élastiques.

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpes se prolongeant sur au moins une des surfaces.

On entend par « matériau caoutchoutique », un élastomère diénique, c'est-à-dire de manière connue un élastomère issu d'au moins en partie de monomères diènes.

Par « flanc » d'un pneumatique, on entend une partie de la surface latérale du pneumatique disposée entre la bande de roulement du pneumatique et un bourrelet dudit pneumatique, débutant à partir des extrémités des découpes de la bande de roulement et se prolongeant jusqu'au bourrelet.

Un dispositif de caractérisation d'un pneumatique en uniformité, référencé 20 dans son ensemble, est configuré pour mesurer les différences d'épaisseurs du pneumatique 10 et d'en déduire les irrégularités de répartition de masses notamment au sommet du pneumatique.

En effet, les nappes de bandage au sommet du pneumatique renferment généralement des parties métalliques soudées, ce qui crée entre autres localement des surépaisseurs.

A cet effet, le dispositif 20 comprend un bâti 22 et un support 24 du pneumatique 10 monté en rotation par rapport au bâti 22. Le support 24 rotatif peut également être monté mobile en translation par rapport audit bâti 22 afin de mettre en position le pneumatique 10. On pourrait prévoir un support 24 rotatif fixe en translation.

Le pneumatique 10 non gonflé est posé sur le support 24. Cela permet d'éviter les temps de montage/démontage du pneumatique sur une jante. Le support 24 s'apparente à une plaque plane. La pose du pneumatique peut être réalisée rapidement sans nécessité d'un centrage précis sur la plaque et sans risque que le pneumatique soit éjecté par la force centrifuge, le support 24 étant entrainé à basse vitesse. La surface de réception plane du support 24 est destinée à recevoir un des flanc 16 ou 14 du pneumatique. La surface de réception plane du support 24 est formée par la surface supérieure du support. Le flanc 16 ou 14 du pneumatique en appui sur la surface de réception plane est la seule partie du pneumatique en contact avec le support 24. Cela a également pour avantage d'avoir un accès précis à la surface interne du pneumatique. De plus, le pneumatique 10 étant statique par rapport au support rotatif et non directement entraîné en rotation, le pneumatique ne risque pas de se déformer lors de la rotation à faible vitesse du support 24 rotatif. Le support 24 rotatif peut être entraîné en rotation manuellement ou par un organe d'entraînement (non représenté), tel que par exemple un moteur.

Par « basse vitesse », on entend une vitesse de rotation du support 24 rotatif inférieure ou égale à environ 20tr/mn.

Tel qu'illustré, le dispositif 20 comprend deux cales ou butées 26 solidaires du support 24 rotatif pour le centrage du pneumatique 10 à caractériser. Par exemple, le dispositif 20 comprend trois pions. En variante, ces cales 26 peuvent ne pas être prévus compte tenu de l'entrainement du support 24 à basse vitesse.

Le dispositif 20 comprend en outre un organe 29 de mesure de la position angulaire du support 24 rotatif qui est solidaire du bâti 22. L'organe de mesure de la position angulaire du support rotatif 24 peut être, par exemple, un codeur configuré pour lire une référence angulaire, telle que par exemple un code à barres inscrit sur le pneumatique. Le codeur 29 est fixé, à titre d'exemple non limitatif, sous le support 24 rotatif.

Tel qu'illustré, le dispositif 20 comprend en outre deux organes de mesure 28a, 28b solidaires du bâti 22 configurés pour mesurer la géométrie de surface du pneumatique à caractériser.

Les deux organes de mesure 28a, 28b sont placés respectivement de sorte à mesurer, pour chaque position angulaire du support 24 rotatif, simultanément la géométrie de surface interne et la géométrie de surface externe du pneumatique 10 lors de la rotation du support 24 rotatif. Les deux organes de mesure 28a, 28b sont placés notamment face à face. Les organes de mesure 28a, 28b sont configurés pour mesurer au moins la géométrie de surface interne et la géométrie de surface externe du pneumatique 10 au sommet du pneumatique 10. On pourrait prévoir d'autres organes de mesure pour mesurer les géométries de surface interne et externe du pneumatique 10 à d'autres endroits du pneumatique, par exemple des flancs 14, 16.

Les organes de mesure 28a, 28b peuvent être montés mobiles en translation selon l'axe vertical du dispositif afin de les rapprocher du support rotatif 24 et notamment du pneumatique 10.

Les organes de mesure 28a, 28b sont, par exemple, des lasers, par exemple en ligne ou en point, ou encore un capteur de type palpeur comprenant une jauge de déformation ou tout capteur capable de mesurer la géométrie de surface interne et externe du pneumatique 10.

Le dispositif 20 comprend une unité électronique de commande 30 comprenant un module 32 d'acquisition des signaux de géométrie de surface du pneumatique 10 provenant des organes de mesure 28a, 28b.

L'unité électronique de commande 30 comprend en outre un module 34 de détermination de l'épaisseur du pneumatique, et notamment des variations d'épaisseur pour chaque position angulaire dudit pneumatique, en fonction desdits signaux de géométrie de surface interne et externe.

L'unité électronique de commande 30 comprend en outre un module 36 de conversion des variations d'épaisseur pour chaque position angulaire dudit pneumatique en variations de masse en fonction d'une densité moyenne prédéterminée du pneumatique. Le module 36 de conversion peut comprendre un ou plusieurs filtres permettant de s'affranchir des sculptures du pneumatique.

Le module 36 comprend par exemple un module de prédétermination de la densité moyenne du pneumatique. En particulier selon l'invention, il comprend des moyens d'analyse pour relier les mesures géométriques d'un pneumatique au modèle du pneumatique ou à son numéro de série, ledit modèle du pneumatique étant associé à une cartographie de la densité du pneumatique. Les mesures géométriques incluent les défauts de soudures, par exemple détectées à l'aide des organes de mesure (28a, 28b) ou d'un organe de mesure additionnel, tel qu'un laser.

Dans le cas d'un laser, la détection des défauts de soudure s'effectue par exemple en utilisant un télémètre laser ligne, ou à balayage, un rayon laser étant projeté de manière continue sur une surface du pneumatique, ladite surface renvoyant le rayon lumineux. Le boîtier du télémètre laser réceptionne le rayon renvoyé et calcule le déphasage, relié au temps de parcours du rayon, entre l'émission et la réception du rayon afin de déduire la distance séparant le télémètre du pneumatique. Si deux télémètres laser sont placés de part et d'autre du pneumatique avec leurs faisceaux alignés sur un même axe, il suffit de connaitre leur écartement et d'en soustraire les mesures effectuées par les télémètres pour déduire les irrégularités dans le pneumatique ou les défauts de soudure. Les défauts de soudure sont ainsi détectés et regroupés dans une cartographie des défauts de soudure.

De plus, pour chaque modèle de pneumatique est associée une cartographie de la densité d'un modèle de pneumatique accessible par exemple à l'aide d'un code à barres situés sur le pneumatique. La cartographie de densité est une correspondance entre des valeurs de densité des semi-produits composants le pneumatique et l'azimut de chaque soudure de chaque semi-produit du pneumatique. Les semi-produits sont par exemple les couches de matériaux utilisés pour la fabrication d'un pneumatique.

Le module (36) permet, à l'aide du module de prédétermination de la densité, de lier une cartographie des défauts de soudure à la cartographie de la densité du pneumatique, chaque emplacement de soudure, visible dans la cartographie de densité, pouvant induire un défaut de soudure, visible dans la cartographie des défauts de soudure.

En particulier, certaines soudures sont parallèles à l'axe du pneumatique ou en biais par rapport à cet axe, induisant des défauts caractéristiques de même nature.

Le pneumatique 10 est réalisé principalement en caoutchouc, la densité moyenne du caoutchouc est comprise entre 0.92 et 0.99. Toutefois, le sommet dudit pneumatique présente une densité sensiblement supérieure, du fait de l'intégration de parties métalliques. Le module 36 de conversion est configuré pour détecter ces défauts de soudures et leur appliquer une densité différente, par exemple comprise entre 3 et 5. L'unité électronique de commande 30 comprend un module 38 d'élaboration d'une cartographie de variations de masse autour du pneumatique à partir des informations issues du module 36 de conversion.

Ainsi, grâce à cette cartographie, il est possible d'effectuer des modifications du procédé de fabrication du pneumatique en vue de les maîtriser, voire de les supprimer.

Le dispositif de caractérisation d'un pneumatique en uniformité permet donc de détecter l'ensemble des masses mal réparties sur le pneumatique.

La figure 2 illustre un graphique ayant pour abscisse la position angulaire en ° du pneumatique 10 et en ordonnée, le volume du pneumatique en mm³. Le graphique illustre le profil de variations de volume par rapport à la position angulaire du pneumatique issue du module 34 de détermination des variations d'épaisseur du dispositif de la figure 1. Le profil obtenu montre la présence de masses mal réparties, formées par des pics.

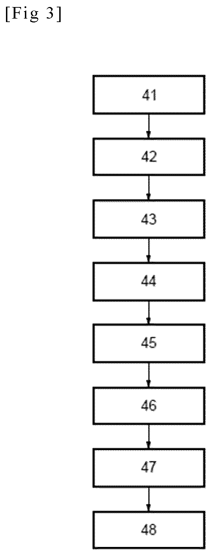

La figure 3 représente un organigramme de mise en œuvre d'un procédé 40 de caractérisation d'un pneumatique en uniformité.

Le procédé 40 permet de mesurer les variations d'épaisseurs du pneumatique 10 et d'en déduire les irrégularités de répartition de masses notamment au sommet du pneumatique.

Lors d'une première étape 41 on pose le pneumatique 10 sur le support 24 rotatif, puis on fait translater, à l'étape 42, ledit support 24 rotatif par rapport au bâti afin de positionner le pneumatique et notamment son sommet entre les organes de mesures géométrique 26a, 26b.

On met, à l'étape 43, en rotation le support 24 rotatif à une vitesse basse, par exemple inférieure ou égale à environ 20tr/mn.

Les organes de mesure 28a, 28b mesurent, à l'étape 24, simultanément la géométrie de surface interne et la géométrie de surface externe du pneumatique 10 lors de la rotation du support 24 rotatif à faible vitesse.

A l'étape 45, on récupère signaux de géométrie de surface interne et externe du pneumatique 10 provenant des organes de mesure 28a, 28b et la position angulaire du support 24 rotatif relevée par un codeur 29 solidaire du bâti 22.

On détermine ensuite, à l'étape 46, l'épaisseur du pneumatique, et notamment les variations d'épaisseur pour chaque position angulaire dudit pneumatique, en fonction desdits signaux de géométrie de surface interne et externe.

Lesdites variations d'épaisseur pour chaque position angulaire du support 24 rotatif sont ensuite converties, à l'étape 47, en variations de masse en fonction d'une densité moyenne prédéterminée du pneumatique, puis on élabore, à l'étape 48, une cartographie de variations de masse autour du pneumatique à partir des variations de masse.

Le dispositif et le procédé de caractérisation d'un pneumatique en uniformité permettent donc de détecter l'ensemble des masses mal réparties sur le pneumatique.

Le comportement dynamique du pneumatique correspond donc à la réponse dudit pneumatique aux défauts de géométrie relevés à basse vitesse et aux défauts complémentaires dus aux masses mal réparties.

Ainsi, il est possible d'anticiper les déformations irrégulières d'un pneumatique sous l'effet de la force centrifuge à haute vitesse et ce en utilisant un dispositif de caractérisation comprenant un support du pneumatique mis en rotation à faible vitesse.

## Revendications

1. Dispositif (20) de caractérisation d'un pneumatique (10) en uniformité, le sommet du pneumatique renfermant des parties métalliques soudées, le dispositif comprenant :
- un bâti (22),
- un support (24) monté rotatif par rapport au bâti (22) et destiné à recevoir le pneumatique (10) à caractériser, - un organe (29) de mesure de la position angulaire du support (24) rotatif qui est solidaire du bâti (22),
- au moins deux organes de mesure (28a, 28b) solidaires du bâti (22) et placés respectivement de sorte à mesurer, pour chaque position angulaire du support (24) rotatif, simultanément la géométrie de surface interne et la géométrie de surface externe du pneumatique (10) lors de la rotation du support (24) rotatif, et
- une unité électronique de commande (30) comprenant un module (32) d'acquisition des signaux de géométrie de surface du pneumatique (10) provenant des organes de mesure (28a, 28b),
l'unité électronique de commande (30) comprenant un module (34) de détermination des variations d'épaisseur du pneumatique pour chaque position angulaire du support (24) rotatif en fonction des signaux de géométrie de surface interne et externe, et un module (36) de conversion desdites variations d'épaisseur en variations de masse en fonction d'une densité moyenne prédéterminée dudit pneumatique (10), **caractérisé en ce que** le module (36)
de conversion est configuré pour détecter des défauts de soudures des parties métalliques du sommet du pneumatique et pour leur appliquer une densité différente prédéterminée, le module (36) comprenant des moyens d'analyses pour relier les mesures géométriques du pneumatique au modèle dudit pneumatique ou à son numéro de série, ledit modèle ou numéro du pneumatique étant associé à une cartographie de la densité du pneumatique, ladite cartographie de la densité du pneumatique étant une correspondance entre des valeurs de densité des semi-produits composants le pneumatique et l'azimut de chaque soudure de chaque semi-produit du pneumatique.

2. Dispositif (20) selon la revendication 1, dans lequel l'unité électronique de commande (30) comprend un module (38) d'élaboration d'une cartographie de variations de masse autour du pneumatique à partir des informations issues du module (36) de conversion.

3. Dispositif (20) selon la revendication 1 ou 2, dans lequel les organes de mesure (28a, 28b) sont configurés pour mesurer au moins la géométrie de surface interne et la géométrie de surface externe au sommet du pneumatique (10).

4. Dispositif (20) selon l'une quelconque des revendications précédentes, dans lequel les organes de mesure (28a, 28b) comprennent des lasers.

5. Dispositif (20) selon l'une quelconque des revendications précédentes, comprenant en outre au moins une cale (26) solidaire du support rotatif (24) pour le centrage du pneumatique (10).

6. Procédé (40) de caractérisation d'un pneumatique en uniformité, le sommet du pneumatique renfermant des parties métalliques soudées, dans lequel :
- on pose le pneumatique (10) à caractériser sur un support (24) rotatif d'un dispositif (20) de caractérisation du pneumatique (10),
- on rapproche le pneumatique et au moins deux organes de mesure (28a, 28b) du dispositif (20),
- on met en rotation le support rotatif (24) à une vitesse inférieure ou égale à 20tr/min, et
- on mesure par les organes de mesure (28a, 28b), pour chaque position angulaire du support (24) rotatif, simultanément la géométrie de surface interne et externe du pneumatique (10) lors de la rotation dudit support (24) rotatif,
- on détermine les variations de répartition de masses sur le pneumatique (10) en déterminant les variations d'épaisseur pour chaque position angulaire dudit pneumatique en fonction des signaux de géométrie interne et externe, et en convertissant lesdites variations d'épaisseur en variations de masse en fonction d'une densité moyenne prédéterminée du pneumatique, une densité différente prédéterminée étant appliquée lors de la détection de défauts de soudures des parties métalliques du sommet du pneumatique, les mesures géométriques du pneumatique étant reliées par des moyens d'analyses au modèle dudit pneumatique ou à son numéro de série, ledit modèle ou numéro du pneumatique étant associé à une cartographie de la densité du pneumatique, ladite cartographie de la densité du pneumatique étant une correspondance entre des valeurs de densité des semi-produits composants le pneumatique et l'azimut de chaque soudure de chaque semi-produit du pneumatique.

7. Procédé (40) selon la revendication 6, dans lequel on élabore une cartographie de variations de masse autour du pneumatique à partir des variations de masse déterminées.

## Patentansprüche

1. Vorrichtung (20) zur Charakterisierung eines Reifens (10) hinsichtlich der Gleichförmigkeit, wobei der Zenit des Reifens geschweißte Metallteile umschließt, die Vorrichtung umfassend:
- ein Gestell (22),
- eine Halterung (24), die in Bezug auf das Gestell (22) drehbar gelagert ist und dazu bestimmt ist, den zu charakterisierenden Reifen (10) aufzunehmen, - ein Organ (29) zum Messen der Winkelposition der drehbaren Halterung (24), das mit dem Gestell (22) fest verbunden ist,
- mindestens zwei Messorgane (28a, 28b), die mit dem Gestell (22) fest verbunden sind und jeweils so angeordnet sind, dass sie beim Drehen der drehbaren Halterung (24) für jede Winkelposition der drehbaren Halterung (24) gleichzeitig die Innenoberflächengeometrie und die Außenoberflächengeometrie des Reifens (10) messen, und
- eine elektronische Steuerungseinheit (30), die ein Modul (32) zur Erfassung der von den Messorganen (28a, 28b) kommenden Oberflächengeometriesignale des Reifens (10) umfasst,
wobei die elektronische Steuerungseinheit (30) ein Modul (34) zur Bestimmung der Dickenänderungen des Reifens für jede Winkelposition der drehbaren Halterung (24) in Abhängigkeit von den Innen- und Außenoberflächengeometriesignalen und ein Modul (36) zur Umwandlung der Dickenänderungen in Massenänderungen in Abhängigkeit von einer vorbestimmten mittleren Dichte des Reifens (10) umfasst, **dadurch gekennzeichnet, dass** das Modul (36) zur Umwandlung dazu ausgestaltet ist, Fehler von Schweißungen der Metallteile des Zenits des Reifens zu detektieren und eine andere vorbestimmte Dichte auf sie anzuwenden, wobei das Modul (36) Analysemittel umfasst, um die geometrischen Messungen des Reifens mit dem Modell des Reifens oder mit seiner Seriennummer zu verknüpfen, wobei das Modell oder die Nummer des Reifens einer Karte der Dichte des Reifens zugeordnet ist, wobei die Karte der Dichte des Reifens eine Entsprechung zwischen Dichtewerten der Halbzeuge, aus denen der Reifen besteht, und dem Azimut jeder Schweißung jedes Halbzeugs des Reifens ist.

2. Vorrichtung (20) nach Anspruch 1, wobei die elektronische Steuerungseinheit (30) ein Modul (38) zur Erstellung einer Karte von Massenänderungen um den Reifen herum ausgehend von den aus dem Modul (36) zur Umwandlung hervorgegangenen Informationen umfasst.

3. Vorrichtung (20) nach Anspruch 1 oder 2, wobei die Messorgane (28a, 28b) dazu ausgestaltet sind, mindestens die Innenoberflächengeometrie und die Außenoberflächengeometrie am Zenit des Reifens (10) zu messen.

4. Vorrichtung (20) nach einem der vorhergehenden Ansprüche, wobei die Messorgane (28a, 28b) Laser umfassen.

5. Vorrichtung (20) nach einem der vorhergehenden Ansprüche, umfassend ferner mindestens einen mit der drehbaren Halterung (24) fest verbundenen Keil (26) zum Zentrieren des Reifens (10).

6. Verfahren (40) zur Charakterisierung eines Reifens hinsichtlich der Gleichförmigkeit, wobei der Zenit des Reifens geschweißte Metallteile umschließt, bei dem:
- der zu charakterisierende Reifen (10) auf eine drehbare Halterung (24) einer Vorrichtung (20) zur Charakterisierung des Reifens (10) gesetzt wird,
- der Reifen und mindestens zwei Messorgane (28a, 28b) des Reifens (20) zueinander geführt werden,
- die drehbare Halterung (24) mit einer Drehzahl kleiner oder gleich 20 U/min in Drehung versetzt wird, und
- durch die Messorgane (28a, 28b) beim Drehen der drehbaren Halterung (24) für jede Winkelposition der drehbaren Halterung (24) gleichzeitig die Innen- und Außenoberflächengeometrie des Reifens (10) gemessen wird,
- die Massenverteilungsänderungen an dem Reifen (10) bestimmt werden, indem die Dickenänderungen für jede Winkelposition des Reifens in Abhängigkeit von den Innen- und Außengeometriesignalen bestimmt werden und indem die Dickenänderungen in Massenänderungen in Abhängigkeit von einer vorbestimmten mittleren Dichte des Reifens umgewandelt werden, wobei bei der Erkennung von Fehlern von Schweißungen der Metallteile des Zenits des Reifens eine andere vorbestimmte Dichte angewandt wird, wobei die geometrischen Messungen des Reifens durch Analysemittel mit dem Modell des Reifens oder mit seiner Seriennummer verknüpft werden, wobei das Modell oder die Nummer des Reifens einer Karte der Dichte des Reifens zugeordnet wird, wobei die Karte der Dichte des Reifens eine Entsprechung zwischen Dichtewerten der Halbzeuge, aus denen der Reifen besteht, und dem Azimut jeder Schweißung jedes Halbzeugs des Reifens ist.

7. Verfahren (40) nach Anspruch 6, bei dem eine Karte von Massenänderungen um den Reifen herum ausgehend von den bestimmten Massenänderungen erstellt wird.

## Claims

1. Device (20) for characterizing a tyre (10) in terms of uniformity, the crown of the tyre containing welded metal parts, the device comprising:
- a frame (22),
- a support (24) mounted with the ability to rotate relative to the frame (22) and intended to accept the tyre (10) that is to be characterized, - a measuring member (29) for measuring the angular position of the rotary support (24) which is secured to the frame (22),
- at least two measuring members (28a, 28b) secured to the frame (22) and positioned respectively in such a way as to measure, for each angular position of the rotary support (24), the internal-surface geometry and the external-surface geometry of the tyre (10) simultaneously as the rotary support (24) rotates, and
- an electronic control unit (30) comprising an acquisition module (32) for acquiring the signals pertaining to the surface geometry of the tyre (10) coming from the measuring members (28a, 28b),
the electronic control unit (30) comprising a module (34) for determining variations in the thickness of the tyre for each angular position of the rotary support (24) on the basis of the internal-surface and external-surface geometry signals, and a module (36) for converting said thickness variations into variations in mass as a function of a predetermined mean density of said tyre (10), **characterized in that** the module (36) for converting is configured to detect defects in the welds of the metal parts of the crown of the tyre and apply a predetermined different density to these, the module (36) comprising analysis means for linking the geometric measurements of the tyre to the model of the said tyre or the serial number thereof, said tyre model or serial number being associated with a map of the density of the tyre, said map of the density of the tyre being a correlation between the density values of the semi-finished products making up the tyre and the azimuthal position of each weld on each semi-finished product of the tyre.

2. Device (20) according to Claim 1, wherein the electronic control unit (30) comprises a module (38) for formulating a map of the variations in mass around the tyre on the basis of the information coming from the conversion module (36).

3. Device (20) according to Claim 1 or 2, wherein the measuring members (28a, 28b) are configured to measure at least the internal-surface geometry and the external-surface geometry at the crown of the tyre (10).

4. Device (20) according to any one of the preceding claims, wherein the measuring members (28a, 28b) comprise lasers.

5. Device (20) according to any one of the preceding claims further comprising at least one block (26) secured to the rotary support (24) for centring the tyre (10).

6. Method (40) for characterizing a tyre (10) in terms of uniformity, the crown of the tyre containing welded metal parts, wherein:
- the tyre (10) that is to be characterized is placed on a rotary support (24) of a tyre (10) characterizing device (20),
- the tyre and at least two measuring members (28a, 28b) of the device (20) are brought closer together,
- the rotary support (24) is set in rotation at a speed less than or equal to 20 rpm, and
- the measuring members (28a, 28b) are used to measure, for each angular position of the rotary support (24), the internal-surface geometry and external-surface geometry of the tyre (10) simultaneously as said rotary support (24) rotates,
- the variations in the distribution of mass over the tyre (10) are determined by determining the variations in thickness for each angular position of said tyre on the basis of the internal-geometry and external-geometry signals and by converting said variations in thickness into variations in mass as a function of a predetermined mean density of the tyre, a predetermined different density being applied when defects in the welds of the metal parts of the crown of the tyre are detected, the geometric measurements of the tyre being linked to the model of the said tyre or the serial number thereof by analysis means, said tyre model or serial number being associated with a map of the density of the tyre, said map of the density of the tyre being a correlation between the density values of the semi-finished products making up the tyre and the azimuthal position of each weld on each semi-finished product of the tyre.

7. Method (40) according to Claim 6, wherein a map of the variations in mass around the tyre is formulated on the basis of the determined variations in mass.
